# EUROPÄISCHE PATENTSCHRIFT

(11) **EP 1 992 425 B1**
(45) Veröffentlichungstag und Bekanntmachung des Hinweises auf die Patenterteilung: **09.03.2011**
(21) Anmeldenummer: 07009927.0
(22) Anmeldetag: 18.05.2007
(51) Int. Cl.: B09B 1/00, B09B 3/00, B09C 1/00, C09K 17/16

(54) **Verfahren zur Wiederverwertung von kunststoffhaltigem Abfall**
Method for recycling waste containing plastic materials
Procédé de recyclage de déchets contenant des matières plastiques

(43) Veröffentlichungstag der Anmeldung: 19.11.2008
(73) Patentinhaber: Kügler, Jost-Ulrich, Dipl.-Ing., D-45219 Essen (DE)
(72) Erfinder: Kügler, Jost Ulrich, Dipl.-Ing., 45239 Essen (DE); Belouschek, Peter, Prof. Dr., 45481 Mülheim an der Ruhr (DE); Kügler, Katja.Dipl.-Ing., 45239 Essen (DE)
(74) Vertreter: Hess, Peter K. G.

(56) Entgegenhaltungen:
- WO-A-99/09114
- WO-A-03/046109
- FR-A- 2 707 093
- FR-A- 2 786 210
- FR-A- 2 872 719
- NL-C2- 1 004 801
- US-A- 5 014 462
- US-A- 5 397 389

## Beschreibung

### 1. Technisches Gebiet

Die vorliegende Erfindung betrifft ein Verfahren zur Wiederverwertung von kunststoffhaltigem Abfall.

### 2. Der Stand der Technik

Kunststoffhaltige Abfälle stellen ein großes Entsorgungsproblem dar. Dies gilt sowohl für weit entwickelte Gesellschaften mit etablierten Entsorgungskonzepten als auch für Entwicklungsländer ohne jegliche Infrastruktur zur Müllentsorgung.

Eine übliche Vorgehensweise besteht in der Verbrennung solcher Abfälle. Dabei entstehen jedoch auch im Fall einer optimierten Verbrennung in einer modernen Anlage sehr große Mengen an klimaschädlichen CO₂-Emissionen, wie die folgende Abschätzung zeigt: Bei einem üblichen Gehalt von ca. 50 % bis 70 % TOC (gesättigte organische Kohlenstoffe) der kunststoffhaltigen Abfälle läuft bei der Oxidation (Verbrennung) folgende Reaktion ab: C + O₂ → CO₂. Berücksichtigt man die Atommassen der daran beteiligten Elemente Kohlenstoff (12) und Sauerstoff (16), ergibt sich ein Faktor 3,66, d.h. die Verbrennung einer Tonne mit kunststoffhaltigem Abfall mit einem 50 % bis 70 %-igen Gehalt an gesättigtem organischen Kohlenstoff führt zu einer Emission von 1,83 t bis 2,56 t Kohlendioxid.

Darüber hinaus entstehen in Müllverbrennungsanlagen durch Zugabe von gut brennbaren, kunststoffhaltigen Abfällen häufig Überhitzungen, die die Verbrennungsanlagen nicht vertragen. In diesem Fall wird zusätzlich nasser Klärschlamm zur Löschung bzw. zur Senkung der Verbrennungstemperaturen eingebracht, was weitere, erhebliche, klimaschädliche CO₂- Emissionen - ca. 1,1 Tonnen pro Tonne Nassklärschlamm (TS 25 bis 30) - verursacht.

In den südlichen Bereichen Europas und in Afrika werden die im Abfall erhöhten Anteile an Plastik, Folien und Kunststoffrückständen meistens nicht einmal in adäquaten Anlagen verbrannt, sondern das Material lagert, schwelt und brennt auf Deponien zusammen mit sonstigem Schutt. Kosten- und Know-how-aufwändige Sicherungen und Rekultivierungen solcher Deponien sind für viele Länder in diesen Gebieten wirtschaftlich nicht darstellbar.

Die US 5 014 462 A offenbart ein Verfahren, gemäß dem Obergriff des Anspruchs 1, zur Aufbereitung von Erdreich zum Verbessern der Durchlässigkeit gegenüber Wasser und Sauerstoff. Um die Elastizität des Erdreichs zu verbessern und um seine Verdichtung zu verhindern werden Gummipartikeln (mindestens 10 Vol.-%) in das Erdreich eingemischt. Die Gummipartikel haben einen Durchmesser zwischen 0,6 cm und 1,3 cm und stammen von zerkleinerten alten Autoreifen.

Die NL 1004801 C2 beschreibt ein Verfahren um die Elastizität von Erdreich, insbesondere von Sportstätten durch Zuschlag von Kunststoffpartikeln einzustellen. Die Kunststoffpartikeln werden auf einen Durchmesser zwischen 0,5 cm und 7,5 cm verkleinert und zwischen 2 und 20 Vol.-% dem Erdreich zugemischt.

Die FR 2 786 210 A offenbart eine Zwischenschicht aus Kunststoffgranulat zur Verbesserung der Dämpfungseigenschaften von Pferdetrainingsbahnen. Die Zwischenschicht weist eine Dicke zwischen 6 cm und 8 cm auf und die Korngröße des Granulats liegt in dem Bereich von 1 mm bis 6 mm.

Die FR 2 872 719 A offenbart ein Verfahren zum Entgiften von mit Erdöl verunreinigtem Erdreich. Das verunreinigte Erdreich wird auf eine Korngröße von etwa 10 cm verkleinert. Danach wird das zerkleinerte verschmutzte Erdreich in ein Wasserbecken unter Zugabe einer Kunststoffmatrix gegeben und durch Einblasen von Luft und unter Umrühren löst sich das Erdöl von der Erde und lagert sich an dem Kunststoff an.

Die WO 99/09114 A beschreibt die Bereitstellung einer halbfesten, verstärkenden Erdreichmischung für Pferderennbahnen, die eine wässrige Erdreichmischung mit diskreten verstärkenden Fasern aufweist. Die Fasern werden auf eine Länge zwischen 0,5 cm und 50 cm abgeschnitten und optional zusammen mit kunststoffhaltigem Abfall dem Erdreich beigemischt.

Die FR 2 707 093 A offenbart das Herstellen einer oberen Schicht mit einer Tiefe zwischen 4 cm und 15 cm mit grasähnlichen Eigenschaften für Pferderenn- bzw. Trainingsbahnen durch Einmischen von Fasern mit einer Länge zwischen 0,4 cm und 7,5 cm in die Sandschicht der Bahn im Verhältnis 1:5 bzw. bis die gewünschten Oberflächeneigenschaften der obersten Schicht erreicht sind.

Die US 5 397 389 A beschreibt das Beimischen von kontaminiertem Erdreich zum Asphalt für den Straßenbau. Die gesamten Zuschlagsstoffe betragen zwischen 30 bis 50 Gewichts-% und können auch zwischen 0,5 und 5 Gewichst-%. zerkleinerte Kunststoffe mit einer Siebgröße < 5cm bzw. < 2,5 cm je nach Sicht des Straßenaufbaus.

Die WO 03/046109 A offenbart den Aufbau eines auf Erdreich basierenden Materials das durch Zumischen von Fasern zur Stabilisierung einer oberen Erdreichschicht und durch Einmischen von elastischen Kunststoffpartikeln in eine darunterliegende Erdreichschicht entsteht und beispielsweise zur Verbesserung der Haltbarkeit von Pferderennbahnen eingesetzt wird. Die Kunststoffpartikel werden kurz vor dem Einbringen in das Erdreich maschinell in definierter Größe aus Kunststoffblöcken oder -platten erzeugt.

Der vorliegenden Erfindung liegt daher das Problem zu Grunde, ein allgemeines Verfahren für die Wiederverwertung solcher Abfälle anzugeben, das einerseits die oben genannten klimaschädlichen Folgen vermeidet und zum anderen umweltschonend und kostengünstig eine Verwertung im Erdbau ermöglicht. Damit können zumindest einige der oben genannten die Umwelt belastenden Nachteile vermieden werden. Die verschiedenen bodenmechanischen Eigenschaften erlauben in Abhängigkeit der Korngröße der aufbereiteten, kunststoffhaltigen Abfälle eine Verwendung in Böden mit vielfältigen positiven Anwendungen.

### 3. Zusammenfassung der Erfindung

Gemäß einem Ausführungsbeispiel der vorliegenden Erfindung wird dieses Problem durch ein Verfahren nach Anspruch 1 gelöst. Das resultierende Bodenmaterial eignet sich in vielfacher Hinsicht hervorragend für den Erdbau und insbesondere für die Rekultivierung oder die Sicherung von problematischen Deponieflächen.

Da von zerkleinerten Substraten aus Kunststoffen oder biologisch behandelten MBA-Abfällen keine negativen Beeinträchtigungen für die Umwelt ausgehen, ist die vorgeschlagene Verwendung der kunststoffhaltigen Abfälle im Erdbau vollständig umwelterträglich. Dies bestätigen die bereits bekannten Verwertungen von Kunststoffen im Bau- und Agrarbereich sowie als Verpackung für Lebensmittel.

### Kunststoffhaltige Abfälle zur Rekultivierung

In einem Beispiel wird der kunststoffhaltige Abfall zunächst so durch Schneiden, Reißen und/oder Mahlen zerkleinert, dass sich ein Gemisch mit einem Korn-∅ ≤ 45 mm ergibt. Dieses eignet sich, dazu Schlamm oder feste, schwere, tonhaltige Schluffe als gut luftdurchlässige Kulturböden aufzubereiten, da diese zur Rekultivierung nicht oder eingeschränkt verwertbar sind.

Ein wichtiger Vorteil dieser beispielhaft aufbereiteten Materialien und Zumischungen in Böden besteht darin, dass durch die zusätzliche Einmischung kunststoffhaltiger, aufbereiteter Abfälle in Rekultivierungsböden zur Erhöhung der Luftdurchlässigkeit nicht gleichzeitig eine Erhöhung der Durchlässigkeit für Wasser entsteht, sondern im Gegenteil eine Wasser haltende, z. T. Wasser sperrende Funktion erzielt wird. Die Zugabe von ca. 30 Vol.-% zerkleinerten, kunststoffhaltigen Abfällen der Kömung-0 0/36 mm in schluffige Kulturböden (Schluffanteil ca. 25 %) zeigt, dass nach leichter Verdichtung der Durchlässigkeitsbeiwert k = 2 bis 3 x 10⁻⁸ m/s beträgt. Trotzdem ist eine gute Luftdurchlässigkeit mit offenen Luftporen > 15 % gegeben. Ohne Zuschlag der zerkleinerten Plastikabfälle beträgt der k-Wert von üblicherweise verwendeten Kulturböden > 1 x 10⁻⁷ m/s.

### Kunststoffhaltige Abfälle zur Abdichtung

In einem Ausführungsbeispiel der Erfindung erfolgt ferner ein Absieben auf eine Korngröße d ≤ 16 mm, vorzugsweise d ≤ 8 mm, wobei vorzugsweise der kunststoffhaltige Abfall im ersten Schritt durch Mahlen und Reißen 2 Gew. % bis 5 Gew. % Staubanteile mit einem Kom-⌀ < 0,06 mm und 5 Gew. % bis Gew. 10 % Feinanteile mit einem Kom-∅ < 2,0 mm enthält. Dieses Material kann als Zuschlag mit 20 Vol.-% bis 30 Vol.-% in sandige Schlämme als eine durch Verstopfung der Bodenporen Wasser speichernde und abdichtende Schicht aufgebracht werden.

In einem anderen Ausführungsbeispiel ergibt ein Sandboden mit 20 % Schluffanteil und 80 % Sandanteil wasserglasvergütet mit Verdichtung auf 100 % der Proctordichte einen Durchlässigkeitsbeiwert von k = 3 x 10⁻⁹ m/s. Der gleiche Boden mit zerkleinerten, kunststoffhaltigen Abfällen (Zugabemenge 30 Vol.-%, Korn-∅ 0 mm bis 10 mm) weist dagegen einen Durchlässigkeitsbeiwert von k = 2 bis 1 x 10⁻¹⁰ m/s auf. Der Boden ist überwiegend wasserabstoßend.

Ein weiteres großes Anwendungsgebiet ist die Sicherung von nicht brennenden Deponien im Mittelmeerraum. In diesen Bereichen stehen für Deponiesicherungen nur Sedimentgesteine zur Verfügung, da bindiger Boden aufgrund seiner geringen Mächtigkeit für Rekultivierungen und landwirtschaftliche Nutzung dringend benötigt wird. Es ist bekannt, dass das Gestein, gebrochen und gemahlen, auf die Korngröße 0/16 mm mit Zuschlag von hydraulisch bindenden Aschen oder Stäuben und einem Mischwassergehalt von ca. 20 % mit Verdichtung einen Durchlässigkeitsbeiwert von k_{f}≥ 1 x 10⁻⁸ m/s bis 5 x 10⁻⁹ m/s erbringt. Derartige Dichtungsschichten werden zur Sicherung von brennenden Halden aufgrund ihrer Hitzebeständigkeit eingesetzt.

Für Hausmülldeponien gilt nach der europäischen Norm für die endgültige Sicherung einer mineralischen Oberflächendichtung ein Durchlässigkeitsbeiwert von k_{f} ≥ 1 x 10⁻⁹ m/s. Die Einmischung o. g. zerkleinerter, kunststoffhaltiger Abfälle der Kömung-0 0/10 mm mit 20 Vol.-% bis 30 Vol.-% ergibt nach Vermischung des zerbrochenen Gesteinsgemisch und hydraulisch bindenden Aschen, nach Verdichtung auf 97 % der Proctordichte einen Durchlässigkeitsbeiwert von k_{f} ≥ 1 x 10⁻¹⁰ m/s, sodass auch in Regionen ohne Vorkommen von Lehm und Ton mit den vor Ort vorkommenden Gesteinschichten hochwertige mineralische Abdichtungsschichten zur Sicherung der Deponien unter Schonung der Umwelt und äußerst wirtschaftlich erstellt werden können.

### Kunststoffhaltige Abfälle für leichte Stabilisierungs- und Sperrschichten

In einem weiteren Ausführungsbeispiel umfasst das Verfahren den Schritt des Verbindens des kunststoffhaltigen Abfalls mit 50 Gew.-% bis 70 Gew.-% mit hydraulisch bindenden Aschen und/oder Stäuben und/oder Schlämmen mit anschließender Verdichtung des Bodenmaterials zu einer erosionsbeständigen Sicherungs- und Sperrschicht. Diese Verdichtung führt bevorzugt zu einer feuchten Dichte von γ_{feucht} = 1,20 t/m³ bis 1,5 t/m³ oder einer trockenen Dichte von γ_{trocken} = 0,9 t/m³ bis 1,2 t/m³. Gleichzeitig wird zur Wasserabweisung ein k-Wert von i.M. 5 x 10⁻⁹ m/s erreicht. Ein solches Bodenmaterial kann als standsicherer Andeckboden zur Oberflächensicherung von Schlammteichen, Deponien oder Halden, insbesondere mit Böschungsneigungen von 35° bis 45° aufgebracht werden. Dabei beträgt die Mächtigkeit des verdichteten Andeckbodens bevorzugt 0,20 m bis 1,00 m. Dadurch können z.B. Standsicherheiten auf steilen Böschungen von Kalihalden mit Böschungsneigungen von ca. 40° und einer Höhe von mehr als 200 m zur Sicherung gegen eindringendes Niederschlagswasser mit Begrünung erstmalig realisiert werden.

### Kunststoffhaltige Abfälle für die Raumbeständigkeit

Durch die Zumischung von 20 Vol.-% bis 40 Vol.-%, der kunststoffhaltigen Abfälle mit einem Kom-∅ ≥ 10 mm aus kunststoffhaltigen Abfällen beispielsweise in bindige Böden mit einem Schluffanteil ≥ 40 Gew.-%, Kom-∅ < 0,06 mm und nachträglicher Verdichtung auf 100 % der Proctordichte entstehen darüber hinaus bei Austrocknung keine Schrumpfungen, so dass das Material eine hohes Maß an Raumbeständigkeit aufweist. Ohne die Beimischung der aufbereiteten Kunststoffabfälle schrumpfen dagegen z.B. Schluffböden um 7 Vol.-% bis 15 Vol.-% und tonhaltige Böden mit einem Tonanteil von > 10 Gew.-%, Korn-∅ < 0,002 mm, um ≥ 15 Vol.-% - 20 Vol.-%.

Bei der Abtrocknung bzw. Austrocknung von mineralischen Abdichtungsböden entstehen üblicherweise Risse, was den Abdichtungseffekt aufhebt. Hiergegen werden nach dem Stand der Technik mit Gewebe bewehrte Dichtsysteme oder Dichtsysteme mit überlagerndem Fließboden der Bodenklasse nach DIN 18 300, Klasse 2, fließende Bodenart, für einen selbstwirksamem Reparatureffekt überlagert, was die Standsicherheit auf Böschungen einschränkt.

Alternativ zu mineralischen Abdichtungen werden auch 1,50 m bis 2,00 m dicke Kulturbodenschichten auf der Deponieoberfläche mit hohem Sorptionsverhalten gegen Niederschlagswasser aufgetragen, sodass durch den 2,00 m mächtigen Boden Niederschlagswasserabweisung gegenüber dem Deponiekörper erfolgen soll. Die Problematik der Rissbildung in Folge von Austrocknung kann jedoch durch Zumischung von zerkleinerten, kunststoffhaltigen Abfällen, vorzugsweise der Kömung-0 0/45/56 mm verhindert werden. Die homogen eingemischten Substrate besitzen eine Bewehrungswirkung gegenüber dem Boden und vermeiden Risse bei Austrocknung. Aufgrund ihrer o.g. Wasserhaltigkeit im eingemischten, bindigen Boden vermeiden sie auch bei Abtrocknung und Wiederbefeuchtung Rissbildungen, was sonst die Sorptionswirkung von Wasser erheblich einschränkt.

Bindige Kulturböden mit geringer Verdichtung besitzen Durchlässigkeitsbeiwerte von k ≈ 1 x 10⁻⁷ m/s. Nach Abtrocknung und Wiederbefeuchtung entstehen Trockenrissbildungen und nach der Wiederbefeuchtung Durchlässigkeitsbeiwerte von k = 1 x 10⁻⁵ m/s bis 1 x 10⁻⁶ m/s. Werden den gleichen Böden o.g. kunststoffhaltige Abfallsubstrate beigemischt, behalten sie ihre wasserabweisende Wirkung in der Größenordnung von k = 1 x 10⁻⁸ m/s bis 6 x 10⁻⁹ m/s.

Der in den genannten Verfahren verwendete kunststoffhaltige Abfall kann Abfälle aus Haus-, Gewerbe und Industriemüll, und/oder aus mechanisch-biologischen Abfallbehandlungsanlagen (MBA) sowie Rückstände aus Siebsortiersanden oder Baumischabfällen und/oder aus Fehlchargen aus Produktionen enthalten. Im Ergebnis können daher diese Abfälle in sehr großen Mengen für Rekultivierungen in gemäßigten und heißen Klimazonen oder für spezielle Sicherungsschichten im Erdbau zugunsten des Grundwasserschutzes für Sicherungsschichten als wertvoller Ersatzbaustoff, anstelle von Schluff und Ton, global umweltneutral wiederverwertet werden.

Weitere Ausführungsformen des erfindungsgemäßen Verfahrens sind in weiteren abhängigen Patentansprüchen definiert.

### 4. Kurze Beschreibung der Zeichnung

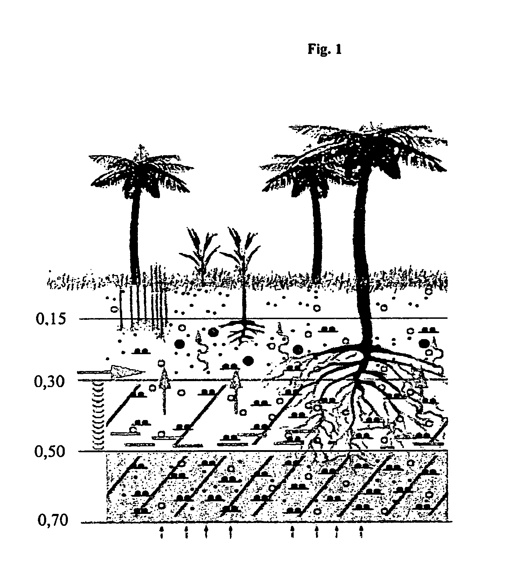

- Fig. 1:: Eine schematische Darstellung eines Bodenaufbaus mit Pflanzsubstraten und aufbereiteten kunststoffhaltigen Abfällen zur Rekultivierung von Wüstengebieten.

### 5. Detaillierte Beschreibung bevorzugter Ausführunizsbeispiele

Im Folgenden werden zunächst Anwendungsfelder des erfindungsgemäßen Verfahren allgemein erläutert, bevor zur Vertiefung spezielle Ausgestaltungen beispielhaft angegeben werden. Dabei versteht es sich, dass Aspekte eines einzelnen Anwendungsbeispiels auch bei anderen Anwendungsbeispielen Verwendung finden können, selbst wenn dies nicht explizit erwähnt wird. Umgekehrt sind nicht alle der nachfolgend im Zusammenhang mit einem Ausführungsbeispiel dargestellten Verfahrensmerkmale zur Durchführung des Verfahrens zwingend erforderlich.

Im Zuge des weltweit erforderlichen Klimaschutzes und der in den einzelnen Ländern geltenden Umweltschutzbedingungen müssen Altlasten oder Deponien rekultiviert werden. Dies gilt sowohl für gemäßigte Klimazonen wie beispielsweise in Mitteleuropa als auch für aride Gebiete wie in Südeuropa oder in großen Teilen Afrikas oder Asiens. Insbesondere hier müssen erhebliche Anstrengungen unternommen werden, um in großem Umfang in den ariden Wüsten-/Steppengebieten Rekultivierungsmaßnahmen für Agrar-, Busch- und Waldpflanzungen mit anstehenden oder künstlichen Bodengemischen umzusetzen.

Speziell in Deutschland stellt die Versalzung von Rhein und Werra durch die ca. 200 m hohen Salzhalden mit Böschungsneigungen von ~ 40 % ein erhebliches Problem dar. Diese Halden konnten bislang gegen Auswaschung durch Niederschlag nicht mit Boden standsicher angedeckt und begrünt werden, da Sicherungsböden und geeignete Abfälle in dem gewünschten Umfang und der benötigten Qualität zur Vorschüttung und Abflachung der Böschungen mit anschließender Oberflächenabdichtung nicht zur Verfügung stehen.

Insgesamt ist es daher erforderlich für derartige Sicherungs- oder Rekultivierungsmaßnahmen besondere Kunstböden zu entwickeln, die diese Probleme der Rekultivierung und der dafür erforderlichen Sicherung lösen.

### 1. Rekultivierungsmaßnahmen in gemäßigten Klimazonen

Zur Rekultivierung von Halden oder Deponien werden künstliche Bodensubstrate aus anstehenden, schluffigen Sandböden mit Zuschlag von aufbereitetem kompostiertem Grünschnitt und geringem Zuschlag von Klär- oder Gewässerschlamm (10 bis max. 20 Gew.-%) zugegeben, sodass die jeweils geltenden analytischen Bedingungen des Umweltschutzes für die Verwertung des künstlichen Kulturbodens zugunsten des Grundwasser- und Bodenschutzes eingehalten werden. Häufig werden dabei zur Sicherung von Altdeponien oder Halden anstelle von Oberflächenabdichtungssystemen Kulturbodengemische in einer Mächtigkeit von > 2,0 m unter der Annahme aufgetragen, dass diese die anfallenden Niederschlagswassermengen sorptiv ohne Versickerung durch den Boden zurückhalten.

Großtechnische Modellversuche haben jedoch gezeigt, dass in den vegetationslosen Perioden trotz derart mächtiger Kulturbodenandeckungen noch erhebliche Wassermengen von bis zu 20 % bis 30 % der Niederschlagsmengen in der vegetationslosen Zeit einen ca. 2,0 m mächtigen Kulturboden durchsickern. Dieses ergibt sich alleine daraus, dass die Kulturböden im Zuge der Klimaschwankungen und der Wassergehaltsänderungen von nahezu wassergesättigt bis trocken (Winter und Sommer) ihre sorptiven Eigenschaften im Laufe der Zeit verlieren und durchlässig werden.

Das oben angegebene Verfahren gemäß eines Ausführungsbeispiels der Erfindung kann dies verhindern. Die Einmischung von ca. 15 % bis 35 % Kunststoffsubstrat mit einem Korn-∅ von 0/45 mm je nach Porenanteil der Pflanzböden ergibt, dass der Boden sowohl im trockenen wie im nassen Zustand die Wasser speichernden, Wasser rückhaltenden Eigenschaften zugunsten der Sorption behält. Nicht mit Kunststoffsubstraten vermengte Kulturböden mit Durchlässigkeitswerten von ca. k = 1 x 10⁻⁸ cm/s bis 1 x 10⁻⁷ m/s gehen dagegen nach mehrmaligem Wechsel zwischen trocken und nass auf Durchlässigkeitswerte von k ≤ 10⁶ cm/s bis 10⁻⁵ cm/s zurück.

Somit können die MBA-Stoffsubstrate nach der biologischen Behandlung für allgemeine Rekultivierungsmaßnahmen als Lockerungsgemisch eingesetzt werden, da sie eingemischt in Größenordnungen von 15 Vol.-% bis 35 Vol.-% eine gute Bodendurchlüftung mit offenen Luftporen ≥ 15 % erzielen - besonders bei schlammig, stark bindigen Böden (Schluffanteil ≥ 30 %, Korn-⌀ < 0,06 mm) - und als 1,50 m bis 2,00 m mächtige Kulturbodenschichten anstelle mineralischer Abdichtungen Wasser rückhaltende Eigenschaften auf Dauer besitzen.

Die Zumischung von Kunststoffsubstraten in Kulturböden verbessert zudem die Standfestigkeit, da sie zu erhöhten Scherfestigkeiten führt. Der Scherwert eines Kulturbodens beträgt üblicherweise (ϕE 28° bis 33°. Durch Einmischung von 30 Vol.-% Kunststoffsubstraten steigt der Wert auf ϕE 38° bis 42°. Die Kunststoffsubstrate besitzen bewehrende Eigenschaften im Boden. Je nach Bodenart und Aufgabenstellung ist die Größe der Substrate gesondert festzulegen. Auf Dammböschungen zur Rekultivierung könnten Substrate mit einem Korn-∅ von 60/100 mm /Flechtwerke oder teure Krallschichten aus PE oder HDPE ersetzen. Somit können auch Kulturbodenschichten über mineralischen Abdichtungen standsicher ohne Sicherungsmaßnahmen auf Böschungen mit Neigungen von 1:1,5 auch in geringer Mächtigkeit von d = 0,20 m bis 1,00 m als Dichtungsschicht aufgetragen werden.

### 2. Sicherung von Halden und Deponien mit hohen und steilen Böschungen

Die verbesserte Standfestigkeit ist insbesondere bei der Sicherung von steilen Halden wie Kalihalden von erheblicher Bedeutung. Kalihalden haben typischerweise Abmessungen von ca. 1.000 m Breite bis 1.500 m Länge mit einer Höhe von > 200 m. Die Böschungsneigungen betragen demnach ~ 40°. Durch Einwirkung von Niederschlägen und Auslaugung der abgelagerten Salze kommt es zu einer erhöhten Versalzung des Grundwassers und des im Einflussbereich liegenden Flusses. Durch Windabtrag kommt es im Umland zu erheblichen Umweltschäden. Eine sichere Abdeckung der Kalihalden mit Boden zur Rekultivierung wurde trotz mehr als 10-jähriger Forschungs- und Entwicklungsarbeiten bislang nicht erreicht. Sämtliche Rekultivierungsmaßnahmen in sogenannten "Dünnbettverfahren" sind gescheitert. Eine Andeckung und Rekultivierung durch geeignete Vorschüttungen zur Abflachung der Böschungen ist nicht möglich, da zum einen nicht ausreichend Land zur Verfügung steht, und zum anderen die hierfür benötigten Bodenmassen zur Abflachung von hohen Böschungen nicht vorhanden sind.

Durch den Einsatz eines Ausführungsbeispiels des oben genannten Verfahrens kann jedoch ein Abdeckboden für die Kalihalden künstlich hergestellt werden, der den Ansprüchen der Standsicherheit bei gleichzeitiger Wasserabweisung und Erosionssicherheit genügt und sogar eine Rekultivierung durch vorab eingemischte Samen im Oberflächenbereich der Stabilisierungsschicht ermöglicht.

Mit
- Kunststoffsubstraten von i.M. 70 Vol.-% der Körnung 0 0/45 mm bzw. ∅ 0/56 mm
- und 20 Vol.-% Baggergut, Gewässerschlamm oder Klärschlamm (TS 25 bis 30 oder TS 25 bis 70)
- und 10 Vol.-% Sand, wie z.B. Gießereisand, Siebsortiersand oder aufbereitete Müllverbrennungsschlacke mit einem Korn-∅ von 0 mm bis 8 mm
und einer anschließenden Stabilisierung mit 15 Gew.-% bis 30 Gew.-%, i.M. 20 Gew.-% (bezogen auf die o.g. Materialmischung) hydraulisch bindender Aschen und Stäube oder Pfannenschlacken, entsteht ein gut verdichtungsfähiges Kunstbodengemisch mit folgenden Eigenschaften:

| | |
|---|---|
| 1. leicht - Gewicht feucht | γ_{f}= 1,2 t/m³ bis 1,4 t/m³ |
| 2. leicht - Gewicht trocken | γₜ = 0,9 t/m³ bis 1,05 t/m³ |
| 3. mit hoher Standfestigkeit: Reibungswinkel | ϕ' < 40° |
| 4. und wirksamem Ersatzreibungswinkel von | S_{E} ≥ 45° |
| 5. Druckfestigkeit | nach 3 Tagen qᵤ ≥ 150-200 kN/m² nach 7 Tagen bis 400 kN/m² |
| 6. Durchlässigkeit | k_{f} < 1 x 10⁻⁸ m/s |
| 7. raumbeständig auch nach 8 Wochen Lagerung im Wasser | |

Die hohe Gesamtscherfestigkeit ist ausschließlich der Verwendung von kunststoffhaltigen Abfällen als Boden mit Füllung der Abfallporen mit Wasser haltendem Schlamm, der durch hydraulisch bindende Aschen und Stäube zusätzlich stabilisiert wird, zuzuschreiben. Hierbei kommt es besonders auf die Minimierung der Zuschlagsstoffe Schlamm ≤ 20 Gew.-% bis 30 Gew.-%, gebrochener Sand ≤ 10 Gew.-% bis 15 Gew.-% an. Eine Übermischung der Poren der kunststoffhaltigen Substrate erbringt ungünstige Werte. Die Kunststoffpartikel wirken wie Faserbewehrungen im Boden. Darüber hinaus besitzt das verdichtete Gemisch wasserabweisende Funktionen, sodass kapillar aufsteigende Chloride durch Andenken des Bodens auf die Salzhalde mit einer ca. 40 cm mächtigen Schicht zurückgehalten werden. Die Standsicherheit der Schicht auf den Kalihalden in Schichtmächtigkeiten von 40 cm bis 60 cm kann insbesondere aufgrund des leichten Gewichtes und der hohen Gesamtscherfestigkeit und der Bewehrungswirkung realisiert werden. Der Auftrag der Kunstböden auf die steilen Böschungen mit Verdichtung kann über seilgeführte, für steile Böschungen geeignete, Erdbaugeräte durchgeführt werden. Die Einbauschütthöhen hierfür betragen 30 cm bis 40 cm. Darüber hinaus besitzen die Schichten eine gute Fruchtbarkeit für die Raseneinsaat. Es besteht die Möglichkeit eine gesonderte Schicht mit entsprechenden Samen zu vermischen und mittels leichtem Anwalzen auf die Sicherungsschichten aufzutragen.

Aus der natürlichen Bodenmechanik ist ein Boden mit derartigen Eigenschaften nicht bekannt. Nur mit einem solchen Kunstboden ist es möglich, nach wirtschaftlichen Gesichtspunkten die genannten Kalihalden zu rekultivieren und zu sichern.

### 3. Rekultivierung von Wüstengebieten in ariden Klimazonen

In ariden Gebieten werden in den überwiegend durchlässigen, sandigen Böden geeignete Schlämme oder Komposte zur Düngung bzw. Wasserhaltung eingemischt. Im Zuge der weltweiten Klimaveränderung durch Vergrößerung der Hitze- und Trockenperioden in allen Klimazonen verbacken diese Bodenschichten jedoch und verlieren dabei durch Austrocknung und Wiederbefeuchtung teilweise ihre Wasser haltende Wirkung, sodass im Ergebnis viel Wasser versickert.

Ein weiteres Problem besteht darin, dass in den Gebieten angrenzend zu Wüsten nur anorganische, sandige Böden mit großer Wasserdurchlässigkeit vorkommen. Diese Sandböden enthalten in den meisten Bereichen Salze in unterschiedlicher Konzentration. In diesen Gebieten herrscht Wasserknappheit. Bei üblicher Bewässerung der Pflanzen gehen große Wassermengen durch Verdunstung und Versickerung verloren. Beim Versickern werden die im Wüstenboden vorhandenen Salze gelöst. Sie steigen kapillar auf und werden dann von den durchwurzelten Zonen zurückgehalten. Aus diesem Grunde sind Bepflanzungen in Wüstengebieten nicht auf Dauer haltbar. Auch durch Winderosionen werden Pflanzen häufig zerstört.

Eine Bepflanzung ist daher auf Dauer nur haltbar, wenn trotz großer Hitze die Wassermenge auf ein Mindestmaß reduziert werden kann und eine Versickerung des Gießwassers verhindert wird. Deshalb ist unter der Bepflanzung eine Schutzschicht gegen Versickerung und aufsteigendes Salz erforderlich.

Um diese Bodeneigenschaften zu erzielen, sind unter Verwendung eines Ausführungsbeispiels des oben angegebenen Verfahrens Pflanzböden ca. 60 cm bis 80 cm unter der Geländeoberfläche vorzugsweise mit dem in Fig. 1 schematisch dargestellten Schichtaufbau herzustellen, der nachfolgend erläutert wird:

Die unterste Schicht 1 sollte dabei vorzugsweise dicht, d.h. Wasser stauend gegen Versickerung und sperrend gegen aufsteigendes Salz sein. Hier ergibt die Einmischung von Kunststoffsubstraten mit 15 Vol.-% bis 30 Vol.-% bei einem Korn-∅ von 0/10 mm bis 0/16 mm in das Bodengemisch mit organisch kompostiertem Abfall oder Schlamm mit ~ 15 Gew.-% bis 30 Gew.-% und anstehendem, sandigem Boden mit 70 Gew.-% bis 85 Gew.-% eine Abdichtungsschicht mit einem Durchlässigkeitsbeiwert von k = 1 x 10⁻⁹ m/s bis k ≤ 5 x 10⁻¹⁰ m/s, wenn das so hergestellte Bodengemisch zusätzlich in Schichtstärken von ca. 30 cm mit einer Vibrationsglattmantelwalze, Walzgewicht 7 t bis 10 t, im 3-maligen Arbeitsgang verdichtet wird.

Die darüber liegende Schicht 2 muss organisch durchsetzt, nährstoffreich, locker, gut luftdurchlässig, aber Wasser haltend sein. Der Zuschlag von Kunststoffsubstraten von 20 Vol.-% bis 30 Vol.-% der Kömung-0 0/45 mm im o.g. Bodengemisch ohne Verdichtung ergibt die Lockerung für Luftdurchlässigkeit und gleichzeitiger hoher Wasserhaltigkeit.

Darüber folgt eine Pflanzschutzschicht 3a mit einer darüberliegenden Bodenschicht 3b gegen Erosion. Hierbei handelt es sich überwiegend um anstehende Böden, die, wie folgt, aufbereitet werden:
- untere Zone 3a: die kapillare Steighöhe der mit Wüstenstaub durchsetzen, anstehenden, sandigen Böden beträgt 60 cm bis 100 cm. Hierdurch würden erhebliche Wassermengen verdunsten, weil die kapillare Steighöhe bis zur Oberfläche reicht. Durch gezielte Einmischung von Kunststoffsubstraten von 5 % bis 20 % der Kömung-0 0/10 mm kann die kapillare Steighöhe auf ≤ 20 cm bis 40 cm, je nach benötigter Steighöhe für Feuchtigkeitsannahmen aus der Schicht 2 für junge Erstbepflanzung reduziert werden, vgl. Fig. 1;
- obere Zone 3b: kapillarbrechende Schicht durch Gleichkörnigkeit und Sonnenschutz und Erosionssicherung, Sandboden ausgefüllt mit 20 Vol.-% bis 30 Vol.-% Kunststoffsubstraten, Korn-∅ 8/16 mm oder 10/45 mm und ca. 10 Gew.-% bis 15 Gew.-% hydraulisch bindende Aschen oder Stäube ergibt eine kapillarbrechende, halbfeste, gegen Windabtrag erosionssichere Schutzschicht, die von den Pflanzen durchwachsen werden kann.

### 4. Herstellung von Abdichtungsschichten in heißen Klimazonen Südeuropas oder Afrikas

Im Zuge des allgemein notwendigen Klimaschutzes gehen afrikanische Staaten, z.B. Nigeria, gezielt dazu über eine Abfallwirtschaft zur Wiederverwertung zu betreiben, was insbesondere die europäische Lösung der Abfallverbrennung zugunsten des Klimaschutzes weitestgehend einschränken soll. Ähnliche Ansätze gibt es auch in europäischen Staaten. In Südeuropa mangelt es an Schluff- und Tonböden, mit denen Basis- oder Oberflächenabdichtungen gebaut werden können. Schluffige Sandböden oder aufbereitete Sedimentgesteine erbringen bisher nicht die gewünschte Dichtigkeit von k < 1 x 10⁻⁹ m/s für Oberflächenabdichtungen und 5 x 10⁻¹⁰ m/s für Basisabdichtungen.

In den südlichen Bereichen Europas und in Afrika kommen jedoch im Abfall erhöhte Anteile an Plastik, Folien und Kunststoffrückständen der Verpackung vor, die zur Zeit nahezu ausschließlich auf Monodeponien mit Schutt lagern, schwelen und brennen. Darüber hinaus werden z.B in Nigeria Anstrengungen dahingehend unternommen, nicht wie in Europa und Nordamerika ausschließlich Dichtungsbahnen aus HDPE-Materialien zur Herstellung von Basis- und Oberflächendichtungen mit ausländischem Know-how einzusetzen. Vielmehr ist beabsichtigt mit im Land vorkommenden Ressourcen eigenständige, haltbare Dichtungsschichten zu bauen.

Hierfür eignet sich die entwickelte Abdichtungstechnik mit bindigen, gemischten und sandigen Böden mittels der Wasserglasvergütung. Ausreichende Durchlässigkeitsbeiwerte von k < 5 x 10⁻¹⁰ m/s werden aber nur erreicht, wenn der Schluffanteil mit einem Korn-∅ ≤ 0,06 mm ≥ 40 % beträgt. Es kommen aber nur sandige Böden mit einem Schluffanteil von 15 % bis maximal 25 % vor. Mittels der Wasserglasvergütung wurden mit diesen Böden und mit entsprechender Verdichtung nur Abdichtungswerte von k = 5 bis 3 x 10⁻⁹ m/s erzielt.

Die Mischung dieser Böden mit Plastikabfällen der Korngröße 0 0/8 mm bis 0/10 mm, Zumischung 25 Vol.-% bis 30 Vol.-%, erbrachte bei gleicher Bodenverwertung und Wasserglasvergütung Durchlässigkeitsbeiwerte bis zu k_{f}= 1 x 10⁻¹⁰ m/s. Diese Werte blieben über einen Beobachtungszeitraum von einem ½ Jahr selbst bei Überstau mit Deponiesickerwasser konstant. Hierdurch ist aufgezeigt, dass auch händisch sortierte und anschließend zerkleinerte Plastikabfälle für Abdichtungszwecke im Basisbereich und für Oberflächenabdichtungen in Afrika und Südeuropa eine wirtschaftliche und zweckmäßige Verwendung finden können.

## Patentansprüche

1. Verfahren zur Wiederverwertung von kunststoffhaltigem Abfall im Erdbau mit den folgenden Schritten:
a. Zerkleinern des kunststoffhaltigen Abfalls auf einen Kom-Ø ≤ 100 mm;
b. Einmischen des zerkleinerten, kunststoffhaltigen Abfalls als Zuschlag in einen schluffhaltigen Boden, so dass der Anteil des eingemischten kunststoffhaltigen Abfalls im schluffhaltigen Boden 15 Vol.-% bis 70 Vol.-% beträgt;
charakterisiert durch
c. Verbinden des kunststoffhaltigen Abfalls mit hydraulisch bindenden Aschen und Schlacken und/oder Stäuben und/oder Schlämmen mit anschließender Verdichtung des Bodenmaterials.

2. Verfahren nach Anspruch 1, wobei der kunststoffhaltige Abfall im Schritt a. so durch Schneiden, Reißen und Mahlen zerkleinert wird, dass sich ein Substratgemisch mit einem Kom-Ø ≤ 45 mm ergibt.

3. Verfahren nach Anspruch 2, wobei der Anteil des eingemischten kunststoffhaltigen Abfalls nach dem Schritt b. 15 Vol.-% bis 35 Vol.-% beträgt und wobei der im Schritt b. verwendete Boden vor dem Einmischen einen Schluffanteil ≥ 15 %, bei einem Korn-Ø < 0,06 mm des Schluffs aufweist.

4. Verfahren nach Anspruch 1, wobei Schritt a. ferner einen Schritt des Absiebens auf ein Korn-Ø ≤ 16 mm, vorzugsweise ein Kom-Ø ≤ 8 mm umfasst.

5. Verfahren nach Anspruch 4, wobei der kunststoffhaltige Abfall im Schritt a. ferner durch Mahlen und Reißen 2 Gew % bis 5 Gew % Staubanteile mit einem Korn-Ø < 0,06 mm und 5 Gew % bis Gew 10 % Feinanteile mit einem Korn-Ø < 2,0 mm enthält.

6. Verfahren nach Anspruch 1, wobei der kunststoffhaltige Abfall im Schritt a. auf einen Korn-Ø von 0/10 mm bis 0/16 mm zerkleinert werden und der Boden nach dem Schritt b. 15 Vol.-% bis 30 Vol.-% kunststoffhaltigen Abfall aufweist und der Boden vor dem Einmischen im Schritt b. 15 Gew.-% bis 30 Gew.-% organisch kompostierten Abfall oder Schlamm und 70 Gew.-% bis 85 Gew.-% sandigen Boden aufweist.

7. Verfahren nach Anspruch 1, wobei die anschließende Verdichtung zu einer feuchten Dichte von γ_{feucht} = 1,2 t/m³ bis 1,5 t/m³ oder einer trockenen Dichte von γ_{trocken} = 0,9 t/m³ bis 1,2 t/m³ führt.

8. Verfahren nach Anspruch 7 wobei im Schritt a. der kunststoffhaltige Abfall auf einen Korn-Ø 0/45 mm oder Ø 0/56 mm zerkleinert wird und der Boden nach dem Schritt b. im Mittel 60 - 80 Vol.-% kunststoffhaltigen Abfall, 15 - 25 Vol.-% Baggergut, Gewässerschlamm oder Klärschlamm und 5-15 Vol.-% Sand mit einem Korn-Ø von 0 mm bis 8 mm aufweist, wobei der kunststoffhaltige Abfall eine bewehrende Funktion zugunsten der Stand-und Gleitsicherheit besitzt.

9. Verfahren nach Anspruch 8 ferner aufweisend einen Stabilisierungsschritt durch Mischen des fertigen Bodens nach dem Schritt b. mit 15 Gew.-% bis 30 Gew.-% hydraulisch bindender Aschen, Stäube und Schlacken.

10. Verfahren nach einem der Ansprüche 7-9 ferner aufweisend den Schritt des Aufbringens des Bodenmaterials als standsicherer Andeckboden zur Oberflächensicherung von Schlammteichen, Deponien oder Halden, insbesondere mit Böschungsneigungen von 35° bis 45°.

11. Verfahren nach Anspruch 9, wobei die Mächtigkeit des verdichteten Andeckbodens 0,20 m bis 1,00 m beträgt.

12. Verfahren nach einem der Ansprüche 1-11, wobei der kunststoffhaltige Abfall Abfälle aus Haus-, Gewerbe und Industriemüll, und/oder aus mechanisch-biologischen Abfallbehandlungsanlagen, Rückstände von Siebsortiersanden bzw. Baumischabfällen und/oder aus Fehlchargen aus Produktionen umfasst.

## Claims

1. A method for recycling of synthetic material containing waste in the earth works with the following steps:
a. crushing of the synthetic material containing waste to a particle diameter ≤ 100 mm; and
b. admixing of the crushed synthetic material containing waste as aggregate into a soil, so that the portion of the admixed synthetic material containing waste in a silt containing soil comprises 15 percent by volume to 70 percent by volume;
**characterized in that**
c. linking of the synthetic material containing waste with hydraulically linking ashes and slag and / or dusts and / or sludge with a subsequent compaction of the soil material.

2. The method according to claim 1, wherein the synthetic material containing waste is crushed in step a. by cutting, tearing and grinding, so that the substrate composite has in a particle diameter ≤ 45 mm.

3. The method according to claim 2, wherein the portion of the admixed synthetic material containing waste after the step b. is 15 percent by volume to 35 percent by volume and wherein the soil applied in step b. has a silt portion ≥ 15 % at a particle diameter < 0.06 mm of the silt before the admixture.

4. The method according to claims 1, wherein step a. further comprises a step of sieving to a particle diameter ≤ 16 mm, preferably to a particle diameter ≤ 8 mm.

5. The method according to claim 4, wherein the synthetic material containing waste in step a. further comprises by grinding and tearing dust portions of 2 percent by weight to 5 percent by weight with a particle diameter < 0.06 mm and fine portions of 5 percent by weight to 10 percent by weight with a particle diameter < 2.0 mm.

6. The method according to claim 1, wherein the synthetic material containing waste in step a. is crushed to a particle diameter of 0/10 mm to 0/16 mm and the soil comprises after step b. synthetic material containing waste of 15 percent by volume to 30 percent by volume and the soil comprises prior to the admixing in step b. organically composted waste or sludge with 15 percent by weight to 30 percent by weight, and sandy soil with 70 percent by weight to 85 percent by weight.

7. The method according to claim 1, wherein the subsequent compaction leads to a density in moist condition of γₘₒᵢₛₜ = 1.2 t/m³ to 1.5 t/m³ or a density in dry condition of γ_{dry} = 0.9 t/m³ to 1.2 t/m³.

8. The method according to claim 7, wherein in step a. the synthetic material containing waste is crushed to a particle diameter o/45 mm or a diameter o/56 mm and the soil contains after step b. on average a synthetic material containing waste of 60 to 80 percent by volume dredged material, water sludge, or sewage sludge of 15 to 25 percent by volume, and sand of 5 to 15 percent by volume with a particle diameter of 0 mm to 8 mm, wherein the synthetic material containing waste has a reinforcing function to support the structural safety and the safety against sliding.

9. The method according to claim 8, further comprising a stabilisation step by mixing the prepared soil after step b. with hydraulically linking ashes, dust and slag of 15 percent by weight to 30 percent by weight.

10. The method according to one of the claims 7 to 9, further comprising the step of applying the soil material as stable cover soil for the surface protection of slurry ponds, landfills or dumps, in particular with slope gradients of 35° to 45°.

11. The method according to claim 9, wherein the thickness of the compacted cover soil is 0.20 m to 1.00 m.

12. The method according to one of claims 1 - 11, wherein the synthetic material containing waste comprises waste from household waste, commercial waste and industrial waste and / or waste from mechanical biological waste treatment plants, residues from sorted sieving sands, respectively construction composite waste, and / or from faulty batches of productions.

## Revendications

1. Procédé de recyclage de déchets, contenant des matières plastiques, pour travaux de terrassement, comprenant les étapes suivantes :
a. fragmenter à un diamètre de grain Ø ≤ 100 mm les déchets contenant des matières plastiques ;
b. intégrer et mélanger dans un sol contenant du limon les déchets fragmentés contenant les matières plastiques à titre d'additif de telle sorte que la part des déchets contenant des matières plastiques intégrés et mélangés dans le sol contenant du limon est de 15 % en volume à 70 % en volume ;
**caractérisé par** le fait de
c. lier les déchets contenant des matières plastiques à des cendres et des scories et/ou des poussières et/ou des boues, à liaison hydraulique, puis compacter le matériau du sol.

2. Procédé selon la revendication 1, dans lequel, dans l'étape a., on fragmente les déchets contenant des matières plastiques par coupure, déchirure et broyage de manière à obtenir un mélange de substrat d'un diamètre de grain Ø≤45 mm.

3. Procédé selon la revendication 2, dans lequel, après l'étape b., la part de déchets intégrés et mélangés, contenant des matières plastiques, est de 15 % en volume à 35 % en volume, et dans lequel, avant le mélangeage, le sol utilisé dans l'étape b. présente une part de limon ≥ 15 %, le limon ayant un diamètre de grain Ø < 0,06 mm.

4. Procédé selon la revendication 1, dans lequel l'étape a. comprend en outre une étape de criblage à un diamètre de grain Ø ≤ 16 mm, de préférence à un diamètre de grain Ø ≤ 8 mm.

5. Procédé selon la revendication 4, dans lequel les déchets contenant des matières plastiques présentent en outre dans l'étape a., par broyage et déchirure, 2 % en poids à 5 % en poids de parts de poussières d'un diamètre de grain Ø < 0,06 mm, et 5 % en poids à 10 % en poids de fines d'un diamètre de grain Ø < 2,0 mm.

6. Procédé selon la revendication 1, dans lequel, dans l'étape a., on fragmente les déchets contenant des matières plastiques à un diamètre de grain Ø de 0/10 mm à 0/16 mm, et après l'étape b., le sol présente 15 % en volume à 30 % en volume de déchets contenant des matières plastiques, et avant le mélangeage dans l'étape b. le sol présente 15 % en poids à 30 % en poids de déchets ou de boues compostés organiquement et 70 % en poids à 85 % en poids de sol sableux.

7. Procédé selon la revendication 1, dans lequel le compactage qui suit procure une densité humide γ_{humide} = 1,2 t/m³ à 1,5 t/m³ ou une densité à sec γ_{sec} = 0,9 t/m³ à 1,2 t/m³.

8. Procédé selon la revendication 7, dans lequel, dans l'étape a., on fragmente les déchets contenant des matières plastiques à un diamètre de grain Ø 0/45 mm ou Ø 0/56 mm, et après l'étape b. le sol présente en moyenne 60 à 80 % en volume de déchets contenant des matières plastiques, 15 à 25 % en volume de déblais de dragage, de boues des eaux ou de boues d'épuration et 5 à 15 % en volume de sable à un diamètre de grain Ø 0 mm à 8 mm, les déchets contenant les matières plastiques possédant une fonction d'armature au profit de la stabilité à l'effondrement et au glissement.

9. Procédé selon la revendication 8, comprenant en outre une étape de stabilisation par mélangeage du sol fini, après l'étape b., avec 15 % en poids à 30 % en poids de cendres, de poussières et de scories, à liaison hydraulique.

10. Procédé selon l'une des revendications 7 à 9, comprenant en outre l'étape d'application du matériau de sol à titre de sol de revêtement stable pour la sécurisation de surface de bassins de décantation, de dépôts de déchets ou de décharges, présentant en particulier des talus d'une inclinaison de 35° à 45°.

11. Procédé selon la revendication 9, dans lequel l'épaisseur du sol de revêtement compacté est de 0,20 m à 1,00 m.

12. Procédé selon l'une des revendications 1 à 11, dans lequel les déchets contenant des matières plastiques comprennent des déchets domestiques, des déchets industriels et/ou des déchets provenant d'installations mécaniques-biologiques de traitement de déchets, des résidus de sables triés au crible ou de déchets mixtes de construction et/ou de charges erronées de productions.
